# DEMANDE DE BREVET EUROPEEN

(11) **EP 1 120 305 A1**
(43) Date de publication de la demande: **01.08.2001**
(21) Numéro de dépôt: 01400135.8
(22) Date de dépôt: 18.01.2001
(51) Int. Cl.: B60J 10/00, B60J 10/04

(54) **Profilés rigides en matière thermoplastique, pour la réalisation de cadres de portes de véhicules automobiles, et leur procédé de fabrication**

(30) Priorité: 25.01.2000 FR 0000910
(71) Demandeur: Société Anonyme dite: BTR Sealing Systems France, 92000 Nanterre (FR)
(72) Inventeur: Dron, Bernard, 92800 Puteaux (FR)
(74) Mandataire: Jolly, Jean-Pierre

(57) **Abrégé**

L'invention concerne un profilé rigide allongé en matière thermoplastique, comprenant au moins deux parties longitudinales (2a, 2b) distinctes, fabriquées séparément et assemblées entre elles de manière à former un corps creux.

Selon l'invention, la section transversale du corps creux constitué par les parties 2a, 2b, a une forme et/ou des dimensions qui varient suivant la longueur du profilé.

## Description

La présente invention concerne des profilés rigides en matière thermoplastique, pour la réalisation de cadres de portes de véhicules automobiles. L'invention concerne également un procédé de fabrication de ces profilés et les cadres de portes de véhicules automobiles réalisés à partir de ceux-ci.

Les portes des véhicules automobiles comprennent généralement un caisson de porte et un cadre métallique rigidement solidaire de ce caisson, au-dessus duquel il fait saillie, dans le prolongement de ses bords latéraux. Ce cadre est habituellement équipé de profilés rapportés, en élastomère ou en un matériau thermoplastique souple, assurant respectivement l'étanchéité à la périphérie de la porte et le guidage et l'étanchéité d'une vitre mobile de cette porte, apte à s'escamoter à l'intérieur du caisson de porte. Ce cadre peut assurer aussi, éventuellement, le maintien en position d'une vitre auxiliaire fixe, conjointement avec un montant auxiliaire, parfois désigné dans la technique par son appellation anglaise de «division bar» .

Les cadres métalliques de porte sont généralement réalisés par profilage et ils sont mis en forme par galbage et cintrage, avec éventuellement soudure dans les angles d'éléments distincts du cadre. Ce n'est que dans un second temps que ces cadres sont équipés des profilés en élastomère ou plastomère souple mentionnés ci-dessus.

On a déjà envisagé de substituer aux cadres métalliques des portes d'automobiles des cadres constitués de profilés rigides en matière plastique, qui sont beaucoup moins lourds que les profilés métalliques. Ces profilés doivent cependant avoir une rigidité suffisante et, dans ce but, diverses formes de profilés ont été proposées.

Un problème que pose la réalisation de tels profilés en matière plastique tient au fait que leur section transversale doit varier de façon importante suivant leur longueur, pour s'adapter aux impératifs techniques du cadre de porte et conférer une rigidité suffisante à la porte. Or les techniques usuelles de fabrication de pièces en matière plastique ne se prêtent pas aisément à de telles variations de section.

En effet, la technique dite d'extrusion variable de matières thermoplastiques ou thermodurcissables à l'état pâteux ne permet que des variations de faible importance, tandis que les techniques de moulage des matières plastiques, si elles se prêtent à des variations de section beaucoup plus importantes, nécessitent des opérations complexes et coûteuses, lorsque les pièces fabriquées sont des corps creux de grande longueur.

Pour remédier à cet inconvénient, la Demanderesse a proposé, dans sa demande de brevet français N° 99 01844, déposée le 16 Février 1999, des profilés rigides en une matière thermoplastique ou thermodurcissable, destinés à la réalisation de cadres de portes de véhicules automobiles, qui peuvent être fabriqués par la technique d'extrusion soufflage ou d'injection soufflage, connue et utilisée avec succès dans d'autres domaines techniques.

Ces profilés comprennent un corps creux allongé, à section transversale fermée, dont la section varie en fonction de sa longueur et auquel sont attenants extérieurement des organes d'ancrage venus de fabrication avec le corps creux et constitués de la matière thermoplastique ou thermodurcissable, qui définissent avec la surface externe de ce corps creux un ou des logements aptes à recevoir des profilés souples d'étanchéité, en élastomère et/ou en un matériau thermoplastique.

De tels profilés se prêtent à une réalisation aisée de cadres de portes d'automobiles, et les profilés contigus d'un tel cadre, en particulier ceux situés dans les angles de celui-ci, peuvent être assemblés entre eux et rendus rigidement solidaires les uns des autres.

Comme indiqué ci-dessus, de tels profilés peuvent être réalisés par une technique d'injection - soufflage, selon laquelle des ébauches de corps creux en matière thermoplastique ou thermodurcissable sont placées dans un moule d'injection, qui est ensuite refermé et maintenu à une température permettant à la matière plastique de se déformer. Un gaz est alors injecté dans l'ébauche et celle-ci se déforme pour épouser la forme du moule.

Cette technique donne entière satisfaction, mais elle est relativement complexe à mettre en oeuvre.

La présente invention vise donc à proposer des profilés du même type général, mais plus faciles à réaliser, car constitués d'au moins deux parties longitudinales distinctes, qui sont fabriquées séparément et qui sont ensuite assemblées entre elles, par tout moyen connu dans la technique, de manière à définir un corps creux.

L'invention a par conséquent pour objet un profilé rigide allongé en matière thermoplastique, à section transversale fermée définissant un corps creux, ce profilé étant destiné à la réalisation de cadres de portes de véhicules automobiles et comprenant au moins deux parties longitudinales distinctes, fabriquées séparément par moulage ou par extrusion et assemblées entre elles de manière à former le profilé creux , les parties du profilé étant assemblées par clipsage de parties de forme complémentaire et par collage ou soudage de celles-ci, caractérisé en ce que le corps creux défini par les parties assemblées a une section transversale en forme de polygone, notamment carrée ou rectangulaire, à côtés rectilignes ou curvilignes, dont la forme et/ou les dimensions varient suivant la longueur du profilé.

La matière thermoplastique dont sont constituées les deux parties du profilé peut être, de façon simple, du polypropylène, mais de très nombreuses autres matières thermoplastiques, seules ou en mélange peuvent à l'évidence être utilisées.

Les parties élémentaires du profilé peuvent être fabriquées par moulage et/ou par extrusion et elles peuvent être ensuite assemblées par clipsage de parties de forme complémentaire et par soudage ou par collage. Ces parties individuelles constituent un autre objet de l'invention.

Comme indiqué ci-dessus, ces profilés sont destinés à réaliser des cadres de portes d'automobiles et ces cadres constituent naturellement un troisième objet de l'invention.

Les profilés constituant ces cadres peuvent être réunis par des inserts engagés à l'intérieur des extrémités creuses des profilés et ayant une section externe sensiblement identique à la section interne de ces profilés, ces inserts pouvant eux-mêmes être pleins ou creux et pouvant être rendus solidaires par soudage ou collage des profilés qu'ils réunissent.

Les parties visibles de l'extérieur des cadres ainsi réalisés sont de préférence des parties de profilés réalisées par moulage, afin d'offrir au regard un aspect attrayant, uniforme et continu.

Des organes d'ancrage faisant saillie à l'extérieur d'au moins une partie constitutive du profilé peuvent avantageusement être prévus pour définir avec la surface extérieure contiguë de cette partie des logements à section en U aptes à recevoir des joints souples d'étanchéité, en élastomère et/ou en un matériau thermoplastique. Ces joints souples pourront avantageusement être prémontés sur l'une des dites parties du profilé, voire même coextrudés avec elle, et livrés sous cette forme aux utilisateurs.

Les extrémités des parois des logements à section en U de ces joints peuvent éventuellement être rabattues vers l'intérieur ou l'extérieur du U, de manière à maintenir en position une partie de forme appropriée d'un tel joint souple.

Avantageusement, une paroi additionnelle attenante à une paroi latérale d'au moins une partie constitutive du profilé et/ou à des prolongements de cette paroi et venue de fabrication avec cette partie vient doubler et renforcer cette paroi latérale et en est séparée par un intervalle dont la section transversale varie suivant la longueur du profilé, les deux parois de cette partie formant ainsi un second corps creux accolé à celui formé par les deux parties du profilé, ce qui renforce très sensiblement la résistance mécanique de ce profilé.

Dans une forme de réalisation préférée de l'invention qui sera décrite ci-après plus en détail, le profilé est constitué de deux parties disposées en regard et comprenant chacune une paroi longitudinale, à partir de laquelle font saillie en direction de la paroi de la partie en regard deux demi-cloisons venues de fabrication avec cette paroi, les extrémités des demi-cloisons des deux parties étant en contact mutuel et assemblées par clipsage et/ou soudage et/ou collage, pour former deux autres parois qui, avec les précédentes, définissent un corps creux.

Avantageusement les bords libres des demi-cloisons destinées à être assemblées peuvent respectivement avoir un profil cylindrique et la forme d'un évidement cylindrique complémentaire, de manière à pouvoir les solidariser par clipsage.

D'autres caractéristiques et avantages de l'invention apparaîtront dans la description détaillée qui va suivre de diverses formes de réalisation de celle-ci. Dans cette description, on se référera aux dessins schématiques annexés, qui n'ont pas de caractère limitatif et sur lesquels :
La figure 1 est une vue en élévation latérale du cadre de porte ;
La figure 2 est une vue en perspective éclatée, illustrant l'assemblage à l'aide d'inserts des profilés contigus d'un coin supérieur de ce cadre de porte ;
La figure 3 est une coupe transversale du cadre et des profilés souples associés, selon la ligne III-III de la figure 1 ;
La figure 3A est une vue analogue à la figure 3 d'une variante du profilé correspondant, équipée d'autres profilés souples formant joints d'étanchéité ;
La figure 4 est une coupe transversale selon la ligne IV-IV de la figure 1 ;
La figure 4A est une vue analogue à la figure 4 d'une variante du profilé correspondant, équipée d'autres profilés souples formant joints d'étanchéité ;
La figure 5 est une coupe partielle selon la ligne V-V de la figure 1 ;
La figure 6 est une coupe selon la ligne VI-VI de la figure 2 ;
La figure 6A est une coupe analogue à la figure 6 d'une variante de réalisation ;
La figure 7 représente une vue en coupe transversale d'un autre profilé conforme à l'invention.

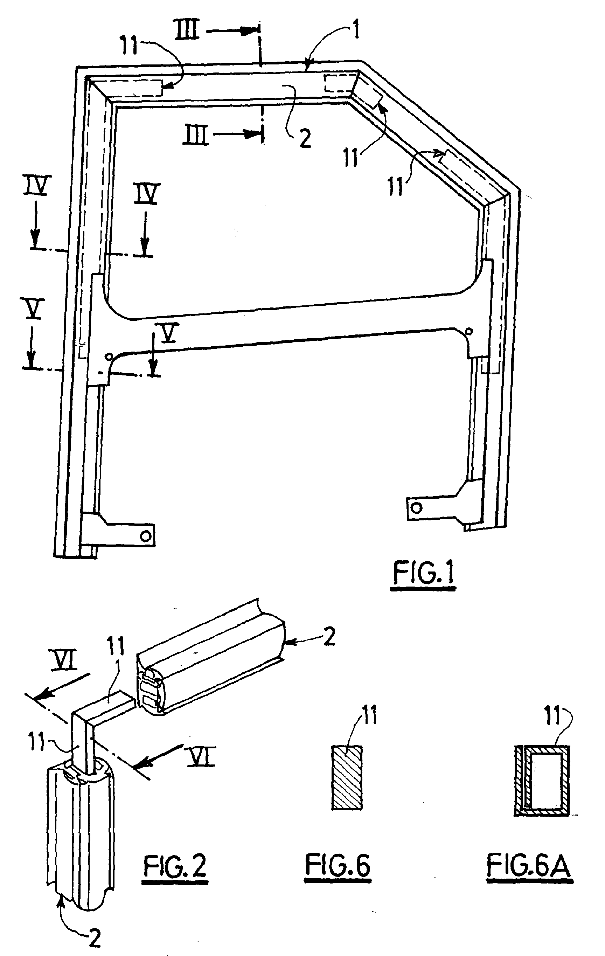

Le cadre 1 de porte d'automobile représenté sur la figure 1 est constitué d'une pluralité de profilés en matière thermoplastique, désignés par la référence générale 2, dont une partie est constituée par un corps creux allongé à section fermée, ici de forme rectangulaire, qui varie de façon sensible suivant la longueur du profilé, de manière à conférer au cadre, en tout point de celui-ci, une résistance mécanique appropriée.

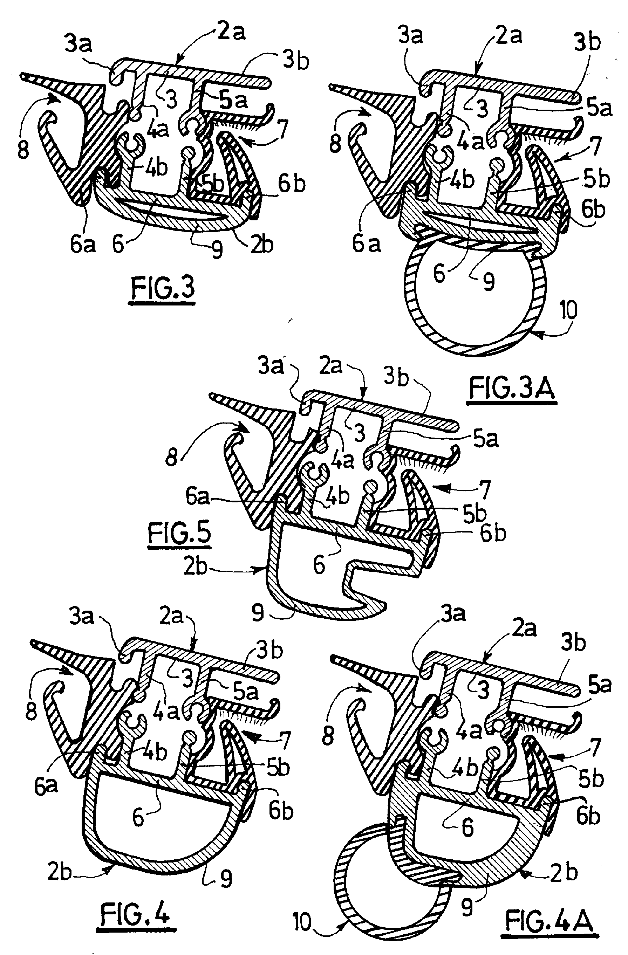

Conformément à l'invention et comme on le voit sur les figures 3, 3A, 4, 4A et 5, chaque profilé comprend deux parties allongées distinctes 2a, 2b, qui ont été fabriquées séparément, par exemple par extrusion ou par moulage, et qui ont été ensuite assemblés.

Chaque partie 2a comprend une paroi longitudinale 3, à partir de laquelle font saillie deux demi-cloisons 4a et 5a, sensiblement perpendiculaires à la paroi 2a et parallèles entre elles, tandis que chaque partie 2b comprend une paroi longitudinale 6, à partir de laquelle font saillie deux demi-cloisons 4b et 5b, sensiblement perpendiculaires à la paroi 6 et parallèles entre elles, l'écartement des demi-cloisons 4a et 5a étant le même que celui des cloisons 4b et 5b.

Les bords libres contigus des demi-cloisons 4a, 4b, d'une part, et des demi-cloisons 5a, 5b, d'autre part, ont des profils complémentaires, ici, respectivement, cylindriques et en forme d'évidements cylindriques, leur permettant d'être assemblés par emboîtement à force, de sorte que, pour réaliser chaque profilé, il suffit d'amener les parois 3 et 6 en position parallèle avec les extrémités des demi-cloisons en position contiguë, et d'assembler celles-ci par clipsage. Cet assemblage par clipsage peut être complété ou remplacé par un collage ou par un soudage à chaud. La forme des cloisons et, notamment, de leurs extrémités coopérant par clipsage ou autre, peut être absolument quelconque.

Le profilé ainsi réalisé comporte une partie creuse, ici à section rectangulaire fermée, définie par les parois 3 et 6 et les demi-cloisons 4a-4b et 5a-5b.

Les parois 3 et 6 du corps creux se prolongent latéralement au-delà des demi-cloisons 4a, 5a, et 4b, 5b, par des parties, respectivement 3a-3b, 6a-6b, éventuellement recourbées à leurs extrémités libres et destinées, avec les demi-cloisons contiguës assemblées, à former un logement à section de forme générale en U, apte à recevoir soit un profilé souple 7 du type dit "coulisse", destiné à guider dans ses mouvements une glace coulissante et à assurer l'étanchéité de celle-ci en position fermée, soit un profilé souple 8 d'étanchéité.

Comme représenté sur les dessins, les joints 7 et 8 peuvent être prémontés sur l'une des parties 2a et 2b, par exemple sur la partie 2b, ou coextrudés avec celles-ci, avant assemblage de ces parties par les utilisateurs, ce qui représente pour ceux-ci un avantage considérable.

La paroi 6 est doublée extérieurement par une paroi attenante 9, venue de fabrication avec elle et dont elle est séparée par un intervalle 10, dont la section transversale varie de façon sensible suivant la longueur du profilé 2. Les deux parois 6 et 9 définissent ainsi un second corps creux à section variable, accolé à celui défini par les parois 3 et 6 et les demi-cloisons assemblées 4a-4b, 5a-5b, en renforçant ainsi considérablement la rigidité et la résistance du profilé 2.

Comme on le voit sur les figures 3A et 4A, la paroi 9 peut elle-même comporter des parties recourbées servant d'organes d'ancrage pour un profilé souple 10, par exemple tubulaire, servant d'organe d'étanchéité, éventuellement livré lui aussi aux utilisateurs, prémonté sur la partie 2b ou coextrudé avec celle-ci.

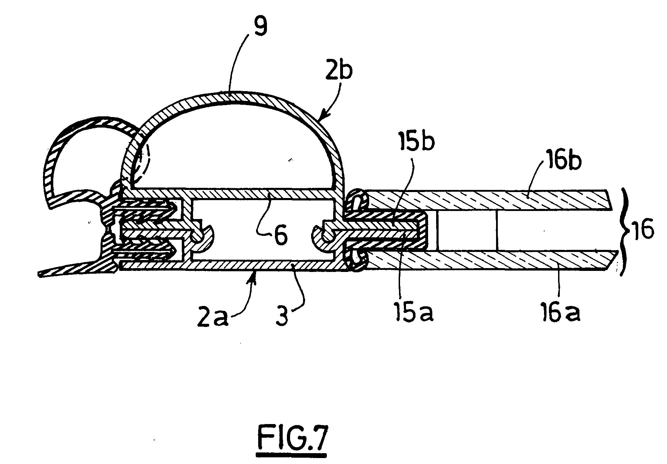

Des inserts 11 (voir figures 1 et 2) peuvent être engagés à l'intérieur des extrémités contiguës des corps creux des profilés du cadre de porte, en particulier dans les angles de ce cadre, dont ils épousent le profil. Ces inserts 11, qui ont une section transversale externe sensiblement égale à la section interne des corps creux 3 associés, servent à la fois de renforts et d'éléments de liaison entre profilés contigus. Ils peuvent être en matière plastique ou en métal gainé de matière plastique, et être rendus rigidement solidaires des profilés dans lesquels ils sont engagés, par soudage par exemple. Ils peuvent être pleins (voir figure 6) ou creux (voir figure 6A).

Sur la figure 7, les organes déjà décrits sont désignés par les mêmes chiffres de référence. Dans cette réalisation, des parties planes 15a, 15b, faisant saillie latéralement à l'extérieur des parties allongées élémentaires 2a, 2b et en contact mutuel sont assemblées par collage ou soudage, de manière à former un organe de guidage engagé de façon connue dans l'intervalle séparant deux vitres 16a, 16b, d'une vitre coulissante double 16.

L'invention apporte donc des profilés constitués de parties distinctes, faciles à fabriquer par des procédés d'extrusion ou de moulage connus dans la technique et assemblables par les utilisateurs, auxquels ils sont de préférence livrés équipés de profilés souples d'étanchéité en élastomère ou en plastomère, en vue de réaliser de façon simple un cadre de porte de véhicule automobile.

## Revendications

1. Profilé rigide allongé en matière thermoplastique, à section transversale fermée définissant un corps creux, ce profilé étant destiné à la réalisation de cadres de portes de véhicules automobiles et comprenant au moins deux parties longitudinales (2a, 2b) distinctes, fabriquées séparément par moulage ou par extrusion et assemblées entre elles de manière à former le profilé creux (2), les parties (2a, 2b) du profilé (2) étant assemblées par clipsage de parties de forme complémentaire et par collage ou soudage de celles-ci, caractérisé en ce que le corps creux défini par les parties assemblées (2a, 2b) a une section transversale en forme de polygone, notamment carrée ou rectangulaire, à côtés rectilignes ou curvilignes, dont la forme et/ou les dimensions varient suivant la longueur du profilé.

2. Profilé selon la revendication 1, caractérisé en ce que l'une (2b) des parties (2a-2b) comprend une paroi longitudinale (6) à laquelle est attenante une seconde paroi longitudinale (9) séparée de la paroi (6) par un intervalle de section variable suivant la longueur de cette partie (2b), de manière à former un second corps creux accolé à celui constitué par les deux parties du profilé.

3. Profilé selon l'une des revendications 1 et 2, caractérisé en ce que des organes d'ancrage (3a, 3b, 6a-6b) venus de fabrication avec au moins une partie (2a, 2b) du profilé, définissent avec la surface extérieure contiguë de cette partie au moins un logement à section en U apte à recevoir un joint souple (7, 8) d'étanchéité.

4. Profilé selon la revendication 3, caractérisé en ce que le joint (7, 8) associé à l'une au moins (2b) des parties (2a, 2b) du profilé est prémonté sur cette partie (2b), ou coextrudé avec cette partie, avant son assemblage avec l'autre partie (2a).

5. Profilé selon l'une des revendications 1 à 4, caractérisé en ce qu'il est constitué de deux parties (2a, 2b) disposées en regard et comprenant chacune une paroi longitudinale (3, 6), à partir de laquelle font saillie en direction de la paroi de la partie en regard deux demi-cloisons venues de fabrication avec cette paroi, les extrémités des demi-cloisons étant en contact mutuel et assemblées par clipsage et/ou soudage et/ou collage, de manière à former deux autres parois, qui, avec les parois (3, 6), définissent un corps creux à section transversale fermée.

6. Profilé selon l'une des revendications 1 à 4, caractérisé en ce que les parties longitudinale assemblées (2a, 2b) comportent chacune une partie plane (15a, 15b) faisant saillie latéralement et en contact mutuel, les parties étant assemblées par collage ou soudage et étant destinées à être engagée dans l'intervalle séparant deux vitres (16a, 16b) d'une vitre coulissante double.

7. Partie d'un profilé (2a, 2b) apte à être rendue solidaire d'une partie du même type, pour former un profilé selon la revendication 5, caractérisée en ce qu'elle comprend une paroi longitudinale (3, 6) à partir de laquelle font saillie deux demi-cloisons (4a-5a; 4b, 5b) venues de fabrication avec cette paroi.

8. Partie d'un profilé (2a) selon la revendication 7, caractérisée en ce que les bords libres des demi-cloisons (4a, 5a) ont une forme telle qu'elles puissent être rendues solidaires par clipsage d'extrémités de forme complémentaire de demi-cloisons (4b, 5b) d'une partie (2b) du même type général.

9. Partie d'un profilé selon la revendication 8, caractérisée en ce que les bords libres des demi-cloisons (4a, 5a, 4b, 5b) ont un profil cylindrique ou comportent une partie évidée de forme cylindrique.

10. Partie d'un profilé selon l'une des revendications 7 à 9, caractérisée en ce qu'elle comporte des organes d'ancrage (3a, 3b, 6a,6b) venus de fabrication et formant avec la surface contiguë de cette partie au moins un logement à section en U apte à recevoir un joint souple d'étanchéité (7, 8).

11. Partie d'un profilé selon la revendication 10, caractérisée en ce qu'elle est prééquipée d'un joint souple d'étanchéité (7, 8) préalablement à son assemblage avec une partie du même type général.

12. Procédé de fabrication d'un profilé selon l'une des revendications 1 à 6 à l'aide de parties (2a, 2b) de profilé selon l'une des revendications 7 à 11, caractérisé en ce que l'on dispose en regard l'une de l'autre les deux parties (2a, 2b) avec le bord libre de leurs demi-cloisons (4a-5a, 4b-5b) en contact mutuel et en ce que l'on rend les demi-cloisons des deux parties solidaires les unes des autres par clipsage et/ou soudage et/ou collage de ces bords libres.

13. Cadre de porte de véhicule automobile, caractérisé en ce qu'il comprend au moins un profilé selon l'une des revendications 1 à 6.

14. Cadre de porte selon la revendication 13, comprenant une pluralité de profilés selon l'une des revendications 1 à 5, caractérisé en ce qu'un insert (11) de profil complémentaire est engagé dans les extrémités contiguës des corps creux de deux profilés contigus.

15. Cadre de porte selon la revendication 14, caractérisé en ce que les inserts (11) sont solidaires, notamment par collage ou soudage, des profilés associés.

16. Cadre selon l'une des revendications 13 à 15, caractérisé en ce qu'il est pré-équipé de joints souples (7-8) d'étanchéité, prémontés sur les profilés ou coextrudés avec ceux-ci.
